Europäisches Patentamt

(19) European Patent Office

Office européen des brevets

(11) Publication number: 0 315 470
A2

# (12) EUROPEAN PATENT APPLICATION

(21) Application number: 88310399.6

(22) Date of filing: 04.11.88

(51) Int. Cl.⁴: G 11 B 7/085
G 11 B 7/09

(30) Priority: 04.11.87 JP 278663/87

(43) Date of publication of application:
10.05.89 Bulletin 89/19

(84) Designated Contracting States: DE FR GB

(71) Applicant: KABUSHIKI KAISHA TOSHIBA
72, Horikawa-cho Saiwai-ku
Kawasaki-shi Kanagawa-ken 210 (JP)

(72) Inventor: Shimada, Hiroshi Patent Division
Toshiba Corporation 1-1-1, Shibaura
Minato-ku Tokyo (JP)

(74) Representative: Muir, Ian R. et al
HASELTINE LAKE & CO. Hazlitt House 28 Southampton
Buildings Chancery Lane
London WC2A 1AT (GB)

(54) Focus search drive apparatus for an optical disc player.

(57) A focus search drive apparatus for an optical disc player for the use of reproduction of an optical record disc. The apparatus includes an objective lens (19), a lens driving device (20) for moving the objective lens (19) in a focus direction substantially perpendicular to the optical record disc and a tracking direction substantially parallel to the optical record disc, a focus search signal generator (14) for generating a focus search signal upon initial activation of the optical disc player, the focus search signal being supplied to the lens driving device (20) for moving the objective lens (19) in the focus direction until the focal point of the objective lens (19) is within a specified range relative to the surface of the optical disc disc, and a dither signal generator (15) for generating a dither singal for vibrating the objective lens (19), the dither signal being supplied to the lens driving device (20) for vibrating the objective lens (19) a limited amount during the movement of the objective lens (19) upon initial activation of the optical disc player.

EP 0 315 470 A2

Bundesdruckerei Berlin

**Description**

# FOCUS SEARCH DRIVE APPARATUS FOR AN OPTICAL DISC PLAYER

The present invention relates generally to an optical disc player, and more particularly, to a focus search drive apparatus for an optical pickup in an optical disc player.

In an optical record disc of the type presently used with a CD (Compact Disc) player or a video disc player, audio or video information is recorded in optically coded form as a series of recesses or pits formed in the information carrying face of the optical record disc and arranged in either a single spiral track or a plurality of concentric tracks about the center axis of the optical record disc.

The audio or video information thus recorded is reproduced by optically scanning the individual recesses or pits along the spiral track or the concentric tracks by means of a convergent spot of a light beam, e.g., a laser beam developed from a laser source. Thus, the laser beam is utilized to detect the lengths and spacings between the scanned recesses or pits. An optical system including the laser source and an objective lens for optically scanning the track is equipped in an optical pickup.

The optical pickup further comprises a lens driving device for carrying out the optical scanning. The lens driving device moves the objective lens in both the direction perpendicular to the optical record disc and the direction parallel to the opical record disc.

During reproduction, the optical record disc is usually rotated about the center axis thereof at a constant linear velocity (CLV) or a constant angular velocity (CAV). The convergent spot of the laser beam is displaced perpendicularly and radially relative to the optical record disc by the lens driving device of the optical pickup. The lens driving device is controlled by a focusing servo system and tracking servo system, resectively, as described later.

The laser beam is applied to a selected track location and reflected by the information carrying face of the optical record disc or is passed through the optical record disc. The laser beam thus reflected by or passed through the optical record disc is then converted into an electric signal by means of a photoelectric transducer mounted on the optical pickup, so as to facilitate further conversion into an audio or video signal.

In order to reproduce the information recorded on the optical record disc, the convergent spot of the laser beam must be precisely focused on the information carrying face of the optical record disc and applied to a selected track location on the information carrying face. The laser beam for the scanning servo operation is reflected by the optical record disc, and then is introduced into a photoelectric transducer. The laser beam thus reflected is converted into a focus error information signal and a tracking error information signal. The focus error information signal is introduced into the lens driving device for driving the objective lens in the optical pickup perpendicularly to the optical record disc, so as to apply the convergent spot to the information carrying face accurately. The lens driving device comprises a focus actuator and a tracking actuator for servo-controlling the convergent spot of the laser beam. The focus actuator and the tracking actuator drive the objective lens in response to a focus servo system and a tracking servo system.

The focus servo system is required to have a gain with relatively high response characteristics so that the convergent spot can follow quick fluctuations of the track in the direction perpendicular to the optical record disc during reproduction conditions. Generally, the gain of the focus servo system is adjusted for adequate response characteristics by using the focus error information signal, which is obtained in the focus search operation. When the disc reproducing operation starts, the objective lens is driven to a position roughly corresponding to the focusing condition by the lens driving device. Then, the objective lens is servo-controlled in a correct focus position by the focus servo system.

When the optical disc player is deactivated, the objective lens is placed at a position secluded in the optical pickup. When the disc reproducing operation starts, the focus search operation is first carried out to move the objective lens towards the optical record disc from the secluded position in the direction perpendicular to the optical record disc.

When the objective lens reaches a prescribed focal range where the focus servo operation becomes effective, the optical pickup changes to operation under the focus servo operation from the operation under the focus search. Thereafter, the tracking servo operation is carried out on the objective lens.

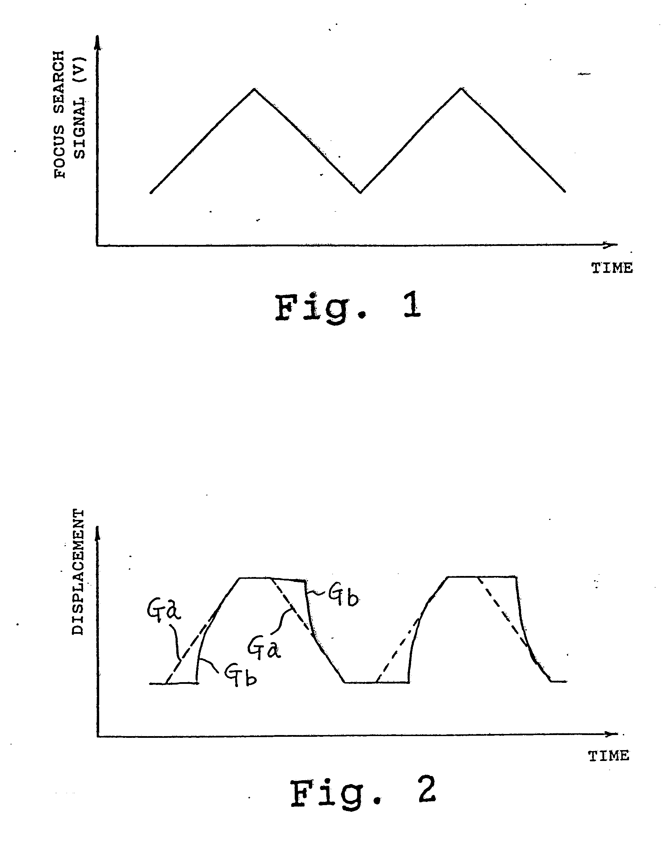

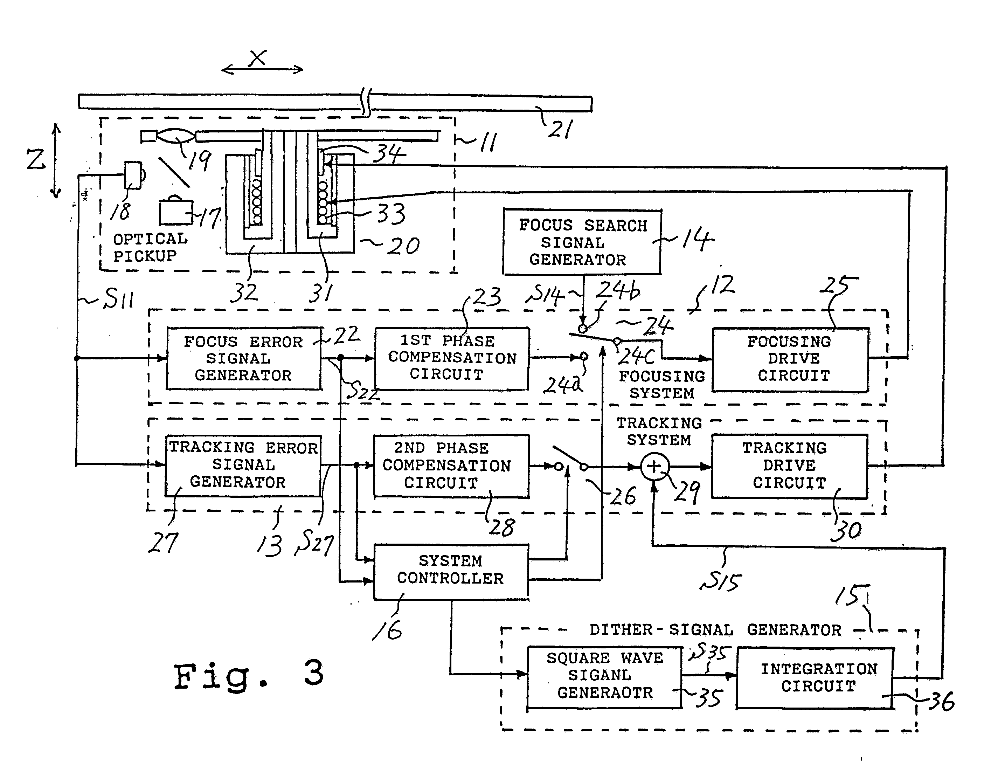

The focus search operation is typically carried out by applying a focus search signal to the lens driving device. The focus search signal has an alternating waveform which triangularly increases and decreases, as shown in FIGURE 1. This is because a detection of a prescribed focus error information signal sometimes fails due to a flaw and/or dust on the optical record disc. The focus search signal has an amplitude sufficiently larger than the amplitude necessary to drive the objective lens for a full stroke in the movable range of the lens driving device. In FIGURE 1, the focus search signal has a frequency of about 0.3 - 1.0 Hz, and the amplitude of about 0.8 - 2.0 Volts p-p. Thus, the objective lens moves in the lens driving device theoretically with a response characteristic, as shown by the dotted line graph Ga in FIGURE 2.

When a prescribed focus error information signal is obtained during the movement of the objective lens, the focus servo operation activates in place of the focus search operation. Then the focus search signal is deactivated.

In the focus search operation, friction has an effect between movable parts including the objective lens and stationary parts of the lens driving device. The friction is not always uniform over the movable range of the lens driving device, since the static friction is larger than the dynamic friction. Further, the friction may vary to a large extent if there are foreign substances such as dust and/or dirt in the bearing between the moving parts and the stationary parts of the lens driving device.

Therefore, even when the focus search signal, as shown in FIGURE 1, is supplied to the lens driving device, the actual displacement of the objective lens does not correctly respond to the focus search signal.

When assuming that the focus search signal linearly increases or decreases, as shown in FIGURE 1, the moving parts do not move until the focus search signal increases or decreases to a prescribed level. When the focus search signal exceeds the prescribed level, the moving parts move at a very fast speed. Thus, the objective lens moves with a response characteristics, as shown by the solid line graph Gb in FIGURE 2. If the objective lens reaches the focus position during such a fast movement, the objective lens cannot stop in the range where the focus servo operation becomes effective.

Therefore, there occurs a problem in that the operation of the objective lens does not change from the focus search operation to the focus servo operation.

As described above, in conventional optical disc players, the movement of the objective lens does not linearly respond to the focus search signal because of friction. As a result, the problem described above occurs.

The present invention therefore seeks to provide a focus search drive apparatus for an optical disc player, in which an objective lens can move more accurately in response to a focus search signal.

The present invention also seeks to provide a focus search drive apparatus for an optical disc player which is capable of accurately transfering the optical pickup from a focus search operation to a focus servo operation.

A focus search drive apparatus for an optical disc player according to one aspect of the present invention includes an objective lens, a driving device for moving the objective lens in a focus direction substantially perpendicular to the optical record disc and a tracking direction substantially parallel to the optical record disc, a focus search system for generating a focus search signal upon initial activation of the optical disc player, the focus search signal being supplied to the driving device for moving the objective lens in the focus direction until the focal point of the objective lens is within a specified range relative to the surface of the optical disc disc and a vibrating system for vibrating the objective lens, the vibrating system including a generator for generating a dither signal, the dither signal being supplied to the driving device for vibrating the objective lens a limited amount during the movement of the objective lens upon initial activation of the optical disc player.

Additional objects and advantages of the present

For a better understanding of the present invention and many of the attendant advantages thereof reference will now be made by way of example to the accompanying drawings, wherein:

FIGURE 1 is a graph showing a typical waveform of the focus search signal used for a focus search operation;

FIGURE 2 is a graph showing response characteristics of an objective lens in a conventional focus search drive apparatus;

FIGURE 3 is a block diagram showing an embodiment of a focus search drive apparatus for an optical disc player, according to the present invention;

FIGURE 4 is a graph showing the waveform of a dither signal output from a dither signal generator of FIGURE 3;

FIGURE 5 is a circuit diagram showing an integration circuit and an adder circuit of FIGURE 3; and

FIGURE 6 is a block diagram showing a part of a second embodiment of the focus search drive apparatus according to the present invention.

The present invention will be described in detail with reference to the FIGURES 3 through 6.

Referring now to FIGURE 3, a first embodiment of the focus search drive apparatus for an optical disc player according to the present invention will be described in detail. FIGURE 3 shows an optical disc player comprising the first embodiment of the focus search drive apparatus.

In FIGURE 3, the optical disc player comprises an optical pickup 11, a focusing system 12, a tracking system 13, a focus search signal generator 14, a dither signal generator 15 and a system controller 16. The system controller 16 is typically constituted by a microcomputor.

The optical pickup 11 comprises a light source such as a laser diode 17, a photoelectric transducer 18, an objective lens 19 and a lens driving device 20. The lens driving device 20 drives the objective lens 19 both in the direction perpendicular to an optical record disc 21 to be played, i.e., a focusing direction, as shown by an arrow Z in the drawing, and the direction parallel to the optical record disc 21, i.e., a tracking direction, as shown by an arrow X in the drawing. The optical pickup 11 outputs a signal S11 in response to light reflection from the optical record disc 21. The pickup signal S11 output from the optical pickup 11 is applied to both the focusing system 12 and the tracking system 13.

The focusing system 12 comprises a focus error signal generator 22, a first phase compensation circuit 23, a first switch 24 and a focus drive circuit 25. The focus error signal generator 22 generates a focus error signal S22 in response to the pickup signal S11. The focus error signal S22 is applied to a first fixed switch terminal 24a of the first switch 24 through the first phase compensation circuit 23. Another fixed switch terminal, i.e., a second fixed switch terminal 24b of the second switch 24 is coupled to the focus search signal generator 14.

The focus search signal generator 14 generates a focus search signal S14. The focus search signal S14 has an alternating triangular waveform similar to the focus search signal, as shown in FIGURE 1. Thus, the focus error signal S22 and the focus search signal S14 are selectively applied to the focus drive circuit 25. The first switch 24 is controlled by the system controller 16.

During a normal reproduction of the optical record disc 21, a movable switch terminal 24c is coupled to the first fixed switch terminal 24a so that the focus error signal S22 output from the focus error signal generator 22 is applied to the focus drive circuit 25. Thus, the focusing system 12 carries out a focus servo operation for the objective lens 19 of the optical pickup 11 in the well known manner. In the normal reproduction, the system controller 16 also turns ON a second switch 26 in the tracking system 13.

The tracking system 13 comprises a tracking error signal generator 27, a second phase compensation circuit 28, the second switch 26, an adder 29 and a tracking drive circuit 30. The tracking error signal generator 27 generates a tracking error signal S27 in response to the pickup signal S11. The tracking error signal S27 is applied to the second switch 26 through the second phase compensation circuit 28.

During the normal reproduction, the system controller 16 turns ON the second switch 26 and deactivates the dither signal generator 15. The tracking error signal S27 output from the tracking error signal generator 27 is applied to the tracking drive circuit 30 through the second switch 26 and the adder 29. Thus, the tracking system 13 carries out a tracking servo operation for the objective lens 19 of the optical pickup 11 in the well-known manner.

Now, a focus search operation which is the subject of the present invention will be described in detail.

When, a reproduction of the optical record disc 21 is commanded, the focus search operation starts. In the focus search operation, the system controller 16 controls the first switch 24, the second switch 26 and the dither signal generator 15. In the first switch 24, the movable switch terminal 24c is connected to the second fixed switch terminal 24b. Thus, the focus search signal S14 output from the focus search signal generator 14 is applied to the focus drive circuit 25 in place of the focus error signal S22. The focus search signal S14 is then applied to the lens drive device 20 of the optical pickup 11. Before the reproduction starts, the objective lens 19 is placed at a position secluded in the optical pickup 11. The focus search signal S14 moves the objective lens 19 toward the optical record disc 21, when the focus search signal S14 increases.

The lens drive device 20 comprises a movable part 31, a stationary part 32, a focusing coil 33 and a tracking coil 34. The movable part 31 movably supports the objective lens 19. The stationary part 32 movably supports the moving part 31. The focusing coil 33 and the tracking coil 34 are mounted on the movable part 31.

When the focusing coil 33 is supplied with the focus error signal S22 or the focus search signal S14, the focusing coil 33 moves the movable part 31 in the focusing direction Z. When the tracking coil 34 is supplied with the tracking error signal $S_{27}$ or a dither signal S15 as described later, the tracking coil 34 rotates the movable part 31 around the axis thereof along the focusing direction Z. Thus, the objective lens 19 mounted on the movable part 31 is moved in the tracking direction X.

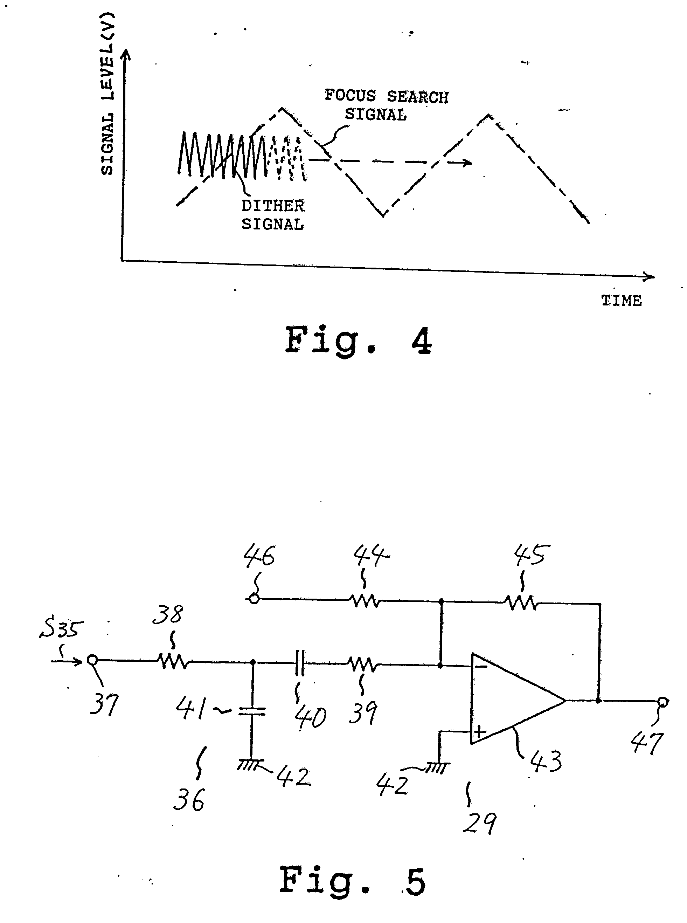

The second switch 26 is turned OFF by the system controller 16 at the start of the reproduction. On the other hand, the dither signal generator 15 is activated by the system controller 16. The dither signal generator 15 comprises a square wave signal generator 35 and an integrating circuit 36. The square wave signal generator 35 generates a square wave signal S35 when activated by the system controller 16. The square wave signal S35 has a frequency of about 50 - 200 Hz, which is much higher than the frequency of the focus search signal S14, and an amplitude of about 2.0 Volts p-p. The integration circuit 36 integrates the square wave signal S35 so that the dither signal S15 is obtained. The dither signal S15 has a triangular waveform alternating at the frequency of the square wave signal S35, as shown in FIGURE 4.

In the focus search operation, the dither signal S15 applied to the other input terminal of the adder 29. On the other hand, the tracking error signal S27 output from the tracking error signal generator 27 is disconnected from the adder 29 by the second switch 26, as described above. Thus, the dither signal S15 is applied to tracking coil 34 of the lens driving device 20 of the optical pickup 11 in place of the tracking error signal S27.

The movable part 31 of the lens driving device 20 is simultaneously driven by both the focus search signal S14 applied to the focusing coil 33 and the dither signal S15 applied to the tracking coil 34. The focusing coil 33 biases the movable part 31 in the focusing direction Z. The dither signal S15 biases the movable part 31 to rotate around the axis of the movable part 31. The dither signal S15 has the high frequency triangular waveform, as shown in FIGURE 4, as described before. Thus, the dither signal S15 vibrates the movable part 31 around the axis thereof in a prescribed limited extent. The rotating vibration of the movable part 31 minimizes a static friction which yields in a bearing portion between the movable part 31 and the stationary part 32 of the lens driving device 20.

Then, the movable part 31 of the lens driving device 20 moves smoothly in the focusing direction Z in response to the focus search sinal S14 applied to the focusing coil 33, due to the minimized static friction. The objective lens 19 can move gradually towards a prescribed focal range where the focus servo operation becomes effective, in response accurately to the focus search signal S14. Thus, the optical disc player can securely detect a state in which the objective lens 19 has reached the prescribed focal range.

When the objective lens 19 reaches the prescribed focal range, the focus error signal S22 with a prescribed level is obtained in the focus error signal generator 22. then, the system controller 16 changes oppositely the first switch 24, the second switch 26 and the dither signal generator 15 from the states in the focus search operation. That is, the movable switch terminal 24c of the first switch 24 is turned to the first fixed switch terminal 24a. Thus, the focusing system 12 becomes effective for the focus servo operation. The second switch 26 is turned ON so that the tracking system 13 becomes effective for the tracking servo operation. On the other hand, the dither signal generator 15 is deactivated.

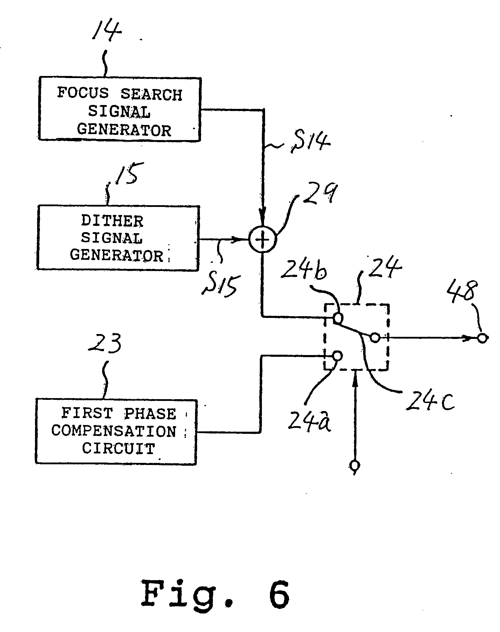

Referring now to FIGURE 5, the integration circuit 36 and the adder 29 will be described in detail. FIGURE 5 is a practical circuit arrangement showing the circuits 36 and 29. In FIGURE 5, a first input terminal 37 is provided for receiving the square wave signal S35 applied from the square wave signal generator 35 (see FIGURE 3). The square wave signal S35 on the first input terminal 37 is applied to the integration circuit 36. The integration circuit 36 comprises two resistors 38 and 39 and two capacitors 40 and 41. The resistor 38, the capacitor 40 and the resistor 39 are coupled in series between the first input terminal 37 and an output end of the integration circuit 36 in turn. The capacitor 41 is coupled between a grounded terminal 42 and a connection node between the resistor 38 and the Capacitor 40. The circuit arrangement of the integration circuit 36 integrates the square wave signal S35. Thus, from the square wave signal S35 a signal having a triangular waveform, as shown in FIGURE 4, is output from the integration circuit 36. The square wave signal S35 is applied to the adder 29.

The adder 29 comprises an operational amplifier 43 and two resistors 44 and 45. The resistor 44 is coupled between the inverse input terminal of the operational amplifier 43 and a second input terminal 46. The second input terminal 46 is provided for receiving the tracking error signal S27 applied from the tracking error signal generator 27 through the second switch 26 (see FIGURE 3). The resistor 45 is coupled between the inverse input terminal and the output end of the operational amplifier 43. The output end is coupled to an output terminal 47. The output terminal 47 is provided for applying a signal output from the adder 29 to the tracking drive circuit 30 (see FIGURE 3). The non-inverse input terminal of the operational amplifier 43 is coupled to the grounded terminal 42.

Referring now to FIGURE 6, a second embodiment of the focus search drive apparatus according to the present invention will be briefly described. FIGURE 6 shows a part of the second embodiment of the focus search drive apparatus.

In FIGURE 6, the focus search drive apparatus comprises a focus search signal generator 14, a dither signal generator 15, a first phase compensation circuit 23 and a switch 24. These circuits or the switch correspond to the focus search signal generator 14, the dither signal generator 15, the first phase compensation circuit 23 and the first switch 24 of FIGURE 3.

The focus search signal generator 14 and the dither signal generator 15 are coupled to the input terminals of the adder 29. The output terminal of the adder 29 is coupled to the second fixed switch terminal 24b of the switch 24. The first phase compensation circuit 23 is coupled to the first fixed switch terminal 24a of the switch 24. The movable switch terminal 24c of the switch 24 is coupled to an output terminal 48. The output terminal 48 is provided for applying signals passing through the switch 24 to the focus drive circuit 25 (see FIGURE 3).

In the focus search operation, both the focus search signal generator 14 and the dither signal generator 15 are activated by the system controller 16 (see FIGURE 3). A focus search signal S14 output from the focus search signal generator 14 and a dither signal S15 output from the dither signal generator 14 are added in the adder 29. In the focus search operation, the system controller 16 also controls the switch 24 so that the movable switch terminal 24c is turned to the second fixed switch terminal 24b. Thus, the focus search signal S14 and the dither signal S15 are simultaneously applied to the lens driving device 20 in the optical pickup 11 through the switch 24 and the focus drive circuit 25.

The focus search signal S14 and the dither signal S15 are applied to the focusing coil 34. The dither signal S15 vibrates the movable part 31 in the focusing direction Z in a prescribed limited extent. The vibration of the movable part 31 minimizes a static friction which yields in the bearing portion between the movable part 31 and the stationary part 32 of the lens driving device 20, similar to the rotating vibration in the first embodiment.

Then, the movable part 31 of the lens driving device 20 moves smoothly in the focusing direction Z in response to the focus search signal S14 applied to the focusing coil 33, due to the minimized static friction. The objective lens 19 can move gradually towards a prescribed focal range where the focus servo operation becomes effective, in response accurately to the focus search signal S14. Thus, the optical disc player can securely detect a state in that the objective lens 19 has reached the prescribed focal range.

The present invention is not limited to only these embodiments, but can be executed while modified variously within the range of its object.

According to the present invention as described above in detail, it is possible to provide an extremely efficient focus search drive apparatus for an optical disc player that is capable of suppressing increases of friction between the moving parts including the objective lens and the stationary parts of the lens driving device, and executing positive changing from the focus search operation to the focus servo operation.

As described above, the present invention can provide an extremely preferable focus search drive apparatus for an optical pickup in an optical disc player.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention includes all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example for the purposes of a divisional application.

**Claims**

1. A focus search drive apparatus for an optical disc player for the use of reproduction of an optical record disc, including an objective lens (19) and drive means (20) for moving the objective lens (19) in a focus direction substantially perpendicular to the optical record disc and a tracking direction substantially parallel to the optical record disc, comprising search means (14) for generating a focus search signal upon initial activation of the optical disc player, the focus search signal being supplied to the drive means (20) for moving the objective lens (19) in the focus direction until the focal point of the objective lens (19) is within a specified range relative to the surface of the optical disc disc, CHARACTERIZED IN THAT the apparatus further comprises vibrating means for vibrating the objective lens (19), the vibrating means including means (15) for generating a dither signal, the dither signal being supplied to the drive means (2) for vibrating the objective lens (19) a limited amount during the movement of the objective lens (19) upon initial activation of the optical disc player.

2. The apparatus of claim 1 wherein the dither signal generating means includes means for generating a high frequency signal (15).

3. The apparatus of claim 2 wherein the high frequency signal generating means (15) includes a square wave signal generator (35) for generating a square wave signal and an integration circuit (36) for shaping the square wave signal into a triangular wave signal.

4. The apparatus of claim 1 wherein the drive means (20) includes a tracking actuator (34) for moving the objective lens (19) in the tracking direction, and the apparatus includes means (29, 30) for supplying the dither signal to the tracking actuator (34) for vibrating the objective lens (19).

5. The apparatus of claim 1 wherein the drive means includes a focus actuator (33) for moving the objective lens (19) in the focusing direction, and the apparatus includes means (24, 25, 29) for supplying the dither signal to the focus actuator (33) for vibrating the objective lens (19).

Fig. 1

Fig. 2

Fig. 3

**Fig. 4**

**Fig. 5**

Fig. 6